(19) Europäisches Patentamt
European Patent Office
Office européen des brevets

(11) Veröffentlichungsnummer: **0 349 489 A2**

(12) # EUROPÄISCHE PATENTANMELDUNG

(21) Anmeldenummer: **89810485.6**

(22) Anmeldetag: **22.06.89**

(51) Int. Cl.[5]: **C 09 B 57/00**
C 07 C 251/86,
C 07 C 251/82, C 08 K 5/30
// C09B26/02

(30) Priorität: **01.07.88 CH 2514/88**

(43) Veröffentlichungstag der Anmeldung:
**03.01.90 Patentblatt 90/01**

(84) Benannte Vertragsstaaten:
**CH DE FR GB IT LI**

(71) Anmelder: **CIBA-GEIGY AG**
**Klybeckstrasse 141**
**CH-4002 Basel (CH)**

(72) Erfinder: **Cseh, Georg, Dr.**
**Praz d'Avant 49**
**CH-1726 Posat (CH)**

**Lienhard, Paul, Dr.**
**Kirschgartenstrasse 14**
**CH-4402 Frenkendorf (CH)**

**Wiedemann, Walter**
**Stettenweg 1**
**CH-4125 Riehen (CH)**

(54) **Hochmolekulares organisches Material enthaltend ein Metallkomplexpigment auf Hydrazonbasis.**

(57) Hochmolekulares organisches Material enthaltend mindestens einen Metallkomplex aus einem Liganden der Formel I

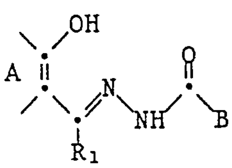

(I),

worin A einen carbocyclisch- oder heterocyclisch-aromatischen Rest und B einen carbocyclischen aromatischen Rest oder einen mindestens ein N-Atom enthaltenden heterocyclischen aromatischen Rest bedeuten, wobei mindestens einer der Reste A und B heterocyclisch sein muss, $R_1$ -$C_1$-$C_{18}$-Alkyl oder einen carbocyclischen aromatischen oder mindestens ein N-Atom enthaltenden heterocyclischen aromatischen Rest bedeutet, und das Metall ein zweifach positiv geladenes Uebergangsmetallkation $Ni^{2+}$, $Cu^{2+}$, $Co^{2+}$, $Zn^{2+}$, $Mn^{2+}$, $Fe^{2+}$, $Cd^{2+}$ oder $Pt^{2+}$ bedeutet oder für den Rest $VO^{2+}$ steht.

EP 0 349 489 A2

## Beschreibung

### Hochmolekulares organisches Material enthaltend ein Metallkomplexpigment auf Hydrazonbasis

Die Erfindung betrifft hochmolekulares organisches Material enthaltend mindestens ein Metallkomplexpigment auf Hydrazonbasis, sowie neue Metallkomplexe.

Metallkomplexe und ihre Verwendung als Farbmittel zum Färben von hochmolekularen organischen Materialien sind seit langer Zeit bekannt. So sind z.B. in der US-Patentschrift Nr. 4 612 014 Metallkomplexe von Hydrazonen als Pigmente beschrieben, wobei der Ligand der dort aufgeführten Metallkomplexe einen Aldehydhydrazonrest aufweist. Auch das US-Patent Nr. 4 670 486 offenbart ähnliche Metallkomplexe, die neben dem Hydrazonrest noch zusätzlich eine Azogruppe im Liganden aufweisen. Derartige Metallkomplexe besitzen zwar im allgemeinen gute Pigmenteigenschaften, sie genügen jedoch z.B. wegen knapper Hitzebeständigkeit und/oder ungenügender Dispergierbarkeit nicht immer den heutigen Anforderungen der Technik.

Es ist nun gefunden worden, dass sich spezifische Metallkomplexe mit strukturell ähnlichen Liganden, welche im Hydrazonrest bestimmte Substituenten tragen, überraschenderweise sehr gut zum Färben von hochmolekularen organischen Materialien eignen und ausgezeichnete Pigmenteigenschaften, insbesondere Dispergierbarkeit und Hitzebeständigkeit, aufweisen.

Die Erfindung betrifft demnach hochmolekulares organisches Material enthaltend mindestens einen Metallkomplex aus einem Liganden der Formel I

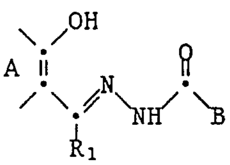

(I),

worin A einen carbocyclisch- oder heterocyclisch-aromatischen Rest und B einen carbocyclischen aromatischen Rest oder einen mindestens ein N-Atom enthaltenden heterocyclischen aromatischen Rest bedeuten, wobei mindestens einer der Reste A und B heterocyclisch sein muss, $R_1$ -$C_1$-$C_{18}$-Alkyl oder einen carbocyclischen aromatischen oder mindestens ein N-Atom enthaltenden heterocyclischen aromatischen Rest bedeutet, und das Metall ein zweifach positiv geladenes Uebergangsmetallkation $Ni^{2+}$, $Cu^{2+}$, $Co^{2+}$, $Zn^{2+}$, $Mn^{2+}$, $Fe^{2+}$, $Cd^{2+}$, $Cd^{2+}$, und $Pt^{2+}$, ist oder für den Rest $VO^{2+}$, steht.

Bevorzugte Metallkationen sind $Ni^{2+}$, $Cu^{2+}$, $Co^{2+}$, und $Zn^{2+}$, vor allem aber $Ni^{2+}$ und $Cu^{2+}$. Man kann ferner Mischungen von derartigen Metallkationen verwenden, beispielsweise Mischungen von $Ni^{2+}$ mit $Zn^{2+}$ oder von $Co^{2+}$ mit $Zn^{2+}$.

Auf 1 Metallkation können 1 oder 2 Reste eines Liganden der Formel I entfallen, so dass 1:1- oder 1:2-Metallkomplexe mit neutralem Charakter vorliegen können.

Die anmeldungsgemässen 1:1-Metallkomplexe können monomer oder, besonders jene des $Cu^{2+}$, dimer sein. Bei den monomeren 1:1-Metallkomplexen kann die vierte Koordinationsstelle des Metallions durch einen zusätzlichen Liganden, wie $H_2O$, $NH_3$ oder $CH_3COO^{\ominus}$ abgesättigt sein. Dies hängt weitgehend von den Herstellungsbedingungen der Metallkomplexe und der Natur des eingesetzten Metallkationen abgebenden Mittels ab. Monomere 1:1-Metallkomplexe mit Acetatresten können z.B. durch folgende Formel dargestellt werden

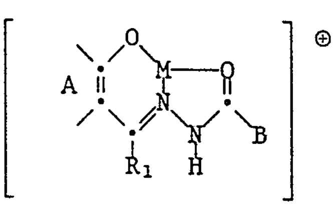

$^{\ominus}OOCCH_3$ ,

worin M das Metallkation und die Symbole A, B und $R_1$ die oben genannte Bedeutung haben.

Bevorzugt sind jedoch 1:1-Komplexe mit neutralem Charakter.

Bedeutet A einen carbocyclischen aromatischen Rest, so handelt es sich dabei z.B. um einen mono- oder bicyclischen Rest, wie Phenylen-, Phenylphenylen- oder Napthylenrest, insbesondere aber zusammen mit der in der Formel I bereits dargestellten Hydroxygruppe um Hydroxybenzol- und Hydroxynaphthalinderivate der Formeln

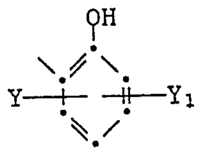 und 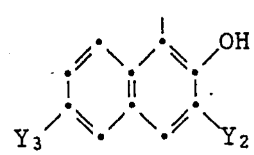 ,

worin Y -H, -Cl, -Br, $-C_1$-$C_{18}$-Alkyl, $-C_1$-$C_{18}$-Alkoxy oder -CN, $Y_1$ -H, -Cl, -Br, $-C_1$-$C_{18}$-Alkyl, $-C_1$-$C_{18}$-Alkoxy, -OCO-$C_1$-$C_{18}$-Alkyl oder -CN, $Y_2$ -H, -COOH, $-CONH_2$, -COO-$C_1$-$C_4$-Alkyl, -CONH-$C_1$-$C_4$-Alkyl oder eine unsubstituierte oder durch Halogenatome und/oder $-C_1$-$C_4$-Alkyl- und/oder $-C_1$-$C_4$-Alkoxygruppen substituierte Phenylcarbamoylgruppe, und $Y_3$ ein H-oder Halogenatom, eine Methoxy-, Nitro- oder Cyangruppe bedeuten.

Halogen bedeutet z.B. Brom, Jod und Chlor, Y und $Y_1$ bedeuten insbesondere Chlor und $Y_3$ bedeutet insbesondere Brom. Bei Y, $Y_1$ und $Y_2$ bedeutet $C_1$-$C_{18}$-Alkyl in den verschiedenen Gruppen z.B. Methyl, Ethyl, n-Propyl, Isopropyl, n-Butyl, tert-Butyl, n-Pentyl, n-Hexyl, Isohexyl, n-Decyl, n-Dodecyl und n-Octadecyl. Bei Y und $Y_1$ bedeutet $C_1$-$C_{18}$-Alkoxy z.B. Methoxy, Ethoxy, n-Propoxy, Isopropoxy, n-Butoxy, n-Hexyloxy, n-Octyloxy, n-Dodecyloxy und n-Octadecyloxy.

Beispiele für o-Hydroxybenzolderivate gemäss obiger Formel leiten sich ab von z.B.:
Hydroxybenzol, 4- oder 3-Chlor-hydroxybenzol, 4-Methyl-hydroxybenzol, 4-Methoxy-hydroxybenzol, 3-Octoxy-hydroxybenzol, 2,4-Dichlor-hydroxybenzol und 4-Brom-hydroxybenzol.

Beispiele für o-Hydroxynaphthalinderivate gemäss obiger Formel leiten sich ab von z.B.:
2-Naphthol, 6-Brom-2-naphthol, 6-Nitro-2-naphthol, 2-Hydroxy-3-napthoesäure, 2-Hydroxy-3-naphthoesäureanilid, 2-Hydroxy-6-brom-3-naphthoesäureanilid, 2-Hydroxy-3-naphthoesäure-o-toluidid oder -p-toluidid, 2-Hydroxy-3-naphthoesäure-2′-methoxyanilid oder -2′-ethoxyanilid, 2-Hydroxy-3-naphthoesäure-2′,4′-dimethoxy-5′-chloranilid, 2-Hydroxy-3-naphthoesäure-2′,5′-dimethoxyanilid, 2-Hydroxy-3-naphthoesäure-2′-methyl-4′-chloranilid, 2-Hydroxy-3-naphthoesäure-2′-methyl-5′-chloranilid, 2-Hydroxy-3-naphthoesäure-4′-chloranilid, 2-Hydroxy-3-naphthoesäure-3′-nitroanilid und 2-Hydroxy-3-naphthoesäureamid.

Stellt A einen heterocyclisch-aromatischen Rest dar, so handelt es sich dabei z.B. um eine 5- oder 6-gliedrige aromatische N-heterocyclische Verbindung, die zusätzlich noch ein O- oder S-Atom aufweisen kann und gegebenenfalls noch ein weiteres N-Atom im Ring oder gegebenenfalls einen ankondensierten Benzolring oder einen weiteren stickstoffhaltigen 5- oder 6-gliedrigen aromatischen heterocyclischen Ring enthalten kann. Als Beispiele für Reste A, zusammen mit der in der Formel I bereits dargestellten Hydroxygruppe, seien solche der Formel

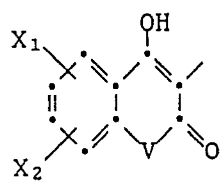

genannt,
worin $X_1$ und $X_2$ unabhängig voneinander -H, Cl oder -Br, $-CH_3$, $-OCH_3$ oder $-COOCH_3$, V O, NH oder N($C_1$-$C_5$-Alkyl) bedeuten, ferner solche der Formeln

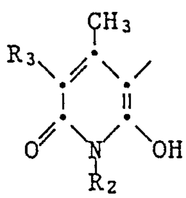 oder 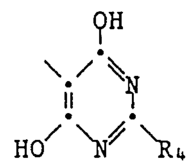 oder 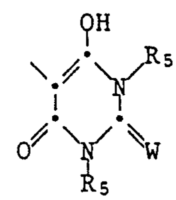 ,

worin $R_2$ -H oder $-C_1$-$C_5$-Alkyl, $R_3$ -CN, -CONH-$C_1$-$C_5$-Alkyl oder $-CONH_2$, und $R_4$ -H, $-C_1$-$C_5$-Alkyl oder eine Phenylgruppe bedeuten, W für O oder S steht, und beide $R_5$ unabhängig voneinander -H, $-C_1$-$C_5$-Alkyl oder unsubstituiertes oder durch -Cl oder $-CH_3$ substituiertes Phenyl bedeuten, oder solche der Formel

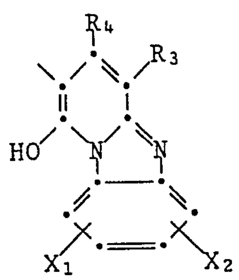 ,

worin $X_1$, $X_2$, $R_3$ und $R_4$ die oben angegebene Bedeutung haben, oder solche der Formel

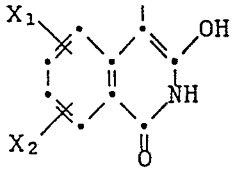

,

worin $X_1$ und $X_2$ die oben angegebene Bedeutung haben, oder Pyrazolone der Formeln

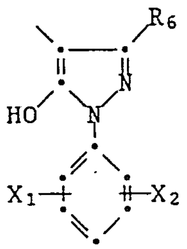

oder

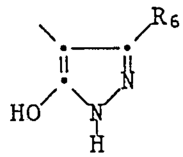

,

worin $R_6$ -$C_1$-$C_5$-Alkyl, -COOH, Alkoxycarbonyl mit 2-6 C-Atomen oder Carbamoyl bedeutet, und $X_1$ und $X_2$ die oben angegebene Bedeutung haben.

$C_1$-$C_5$-Alkyl in den obigen Definitionen bedeutet z.B. Methyl, Ethyl, n-Propyl, Isopropyl, n-Butyl, tert-Butyl oder n-Pentyl.

Als Beispiele für aromatische heterocyclische Verbindungen, aus denen sich Reste obiger Formeln ableiten, seien genannt:
2,4-Dihydroxy-6-methyl-pyridin, 2,6-Dihydroxy-4-methyl-5-cyan-pyridin, 2,6-Dihydroxy-4-methyl-5-carbamoyl-pyridin, 2,4-Dihydroxychinolin, 2,4-Dihydroxy-5-, -6-, -7- oder -8-chlor-chinolin, 2,4-Dihydroxy-6,8-oder -7,8-dichlor-chinolin, 2,4-Dihydroxy-6-, -7- oder -8-methyl-chino lin, 2,4-Dihydroxy-6-chlor-8-methyl-chinolin, Barbitursäure, Thiobarbitursäure, 2-Methyl-4,6-dihydroxy-pyrimidin, 2-Phenyl-4,6-dihydroxy-pyrimidin, 4-Hydroxy-cumarin, 4-Hydroxy-6-methyl-cumarin, 4-Hydroxy-6-methoxy-cumarin, 1-Phenyl-3-methyl-pyrazolon-5, 1-Phenyl-3-carboxy-pyrazolon-5, 1-Phenyl-3-methoxycarbonyl-pyrazolon-5, 1-Phenyl-3-ethoxycarbonyl-pyrazolon-5, 1-o-Chlorphenyl-3-methyl-pyrazolon-5, 1-p-Chlorphenyl-3-methyl-pyrazolon-5, 1-o-Methylphenyl-3-methyl-pyrazolon-5, 1-p-Methylphenyl-3-methyl-pyrazolon-5 und 3-Methyl-pyrazolon-5.

Stellen B oder $R_1$ einen carbocyclisch-aromatischen Rest dar, so handelt es sich dabei z.B. um unsubstituiertes Phenyl oder Naphthyl, oder durch ein bis drei gleiche oder verschiedene Substituenten aus der Gruppe bestehend aus -$C_1$-$C_5$-Alkyl, -$C_1$-$C_5$-Alkoxy, -Cl oder -Br, oder durch ein bis zwei gleiche oder verschiedene Substituenten aus der Gruppe bestehend aus -$NO_2$, -$CF_3$, Phenyl -$COOC_1$-$C_5$-Alkyl, oder durch unsubstituiertes oder durch Chlor, Brom, Methyl oder Methoxy substituiertes Phenoxy oder Benzoylamino substituiertes Phenyl, oder durch -Cl, -$CH_3$ oder -$OCH_3$ substituiertes Naphthyl.

$C_1$-$C_5$-Alkyl in den obigen Definitionen können die gleichen Bedeutungen haben, die bereits oben angegeben worden sind.

Bedeuten B und $R_1$ einen mindestens ein N-Atom enthaltenden heterocyclisch-aromatischen Rest, so leitet sich dieser z.B. von den folgenden heterocyclischen Carbonsäuren ab:
Pyrrol-2-carbonsäure, Pyridin-2-, -3- und -4-carbonsäuren, Pyrazincarbonsäure, Indol-2-carbonsäure und Chinolin-4-carbonsäure, vor allem aber Pyridin-2-, -3- und -4-carbonsäuren.

Stellt $R_1$ $C_1$-$C_{18}$-Alkyl dar, so handelt es sich dabei z.B. um Methyl, Ethyl, n-Propyl, iso-Propyl, n-Butyl, tert-Butyl, n-Hexyl, Isohexyl, n-Octyl, n-Decyl, n-Dodecyl und n-Hexadecyl.

Bevorzugt ist hochmolekulares organisches Material enthaltend mindestens einen Metallkomplex aus einem Liganden der Formel I, worin A einen Phenylen-, Phenylphenylen- oder Naphthylenrest, B einen ein N-Atom enthaltenden heterocyclischen aromatischen Rest und das Metallkation $Ni^{2+}$, $Cu^{2+}$, $Co^{2+}$ oder $Zn^{2+}$ bedeuten.

Besonders bevorzugt ist hochmolekulares organisches Material enthaltend mindestens einen Metallkomplex aus einem Liganden der Formeln II oder III

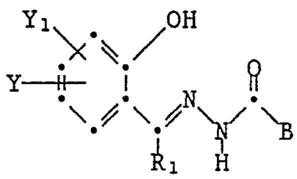 ,

(II)

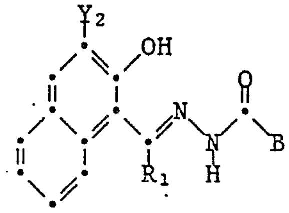 ,

(III)

worin Y -H oder -Cl, $Y_1$ -H, -Cl, -Br, $-CH_3$ oder $-OC_1$-$C_{18}$-Alkyl, $Y_2$ -H, -COOH, $-CONH_2$ oder eine unsubstituierte oder durch -Cl und/oder $-CH_3$ und/oder $-OCH_3$ substituierte Phenylcarbamoylgruppe, $R_1$ $-C_1$-$C_5$-Alkyl oder einen unsubstituierten oder durch -Cl, $-CH_3$ oder $-OCH_3$ substituierten Phenylrest, und B einen 2-, 3- oder 4-Pyridylrest bedeuten, und das Metallkation $Ni^{2+}$, $Cu^{2+}$, $Co^{2+}$, oder $Zn^{2+}$ ist.

Ganz bevorzugt ist hochmolekulares organisches Material enthaltend einen Metallkomplex aus einem Liganden der Formeln II oder III, worin Y -H, $Y_1$ -H, -Cl oder $-CH_3$, $Y_2$ -H, $R_1$ $-CH_3$, $-C_2H_5$ oder $-C_6H_5$ und B 2-, 3- oder 4-Pyridyl bedeuten, und das Metallkation $Ni^{2+}$, $Cu^{2+}$ oder $Co^{2+}$ ist.

Von ganz besonderem Interesse ist hochmolekulares organisches Material enthaltend einen Metallkomplex aus einem Liganden der Formel II, worin Y und $Y_1$ -H, $R_1$ $-CH_3$, $-C_2H_5$ oder $-C_6H_5$ und B 2-, 3- oder 4-Pyridyl sind, und das Metallkation $Ni^{2+}$ oder $Cu^{2+}$ ist.

Ebenfalls von Interesse ist hochmolekulares organisches Material enthaltend mindestens einen Metallkomplex aus einem Liganden der Formel I, worin A einen Chinolin-, Isochinolin-, Cumarin-, Pyridin-, Pyrimidin-oder Pyrazolonrest, B einen ein N-Atom enthaltenden heterocyclischen aromatischen Rest, und das Metallkation $Ni^{2+}$, $Cu^{2+}$, $Co^{2+}$ oder $Zn^{2+}$ bedeuten. Bei dieser Bevorzugung steht A insbesondere für einen Pyrazolon-, Pyrimidin- oder Chinolinrest.

Ganz bevorzugt ist hochmolekulares organisches Material enthaltend mindestens einen Metallkomplex aus einem Liganden der Formel IV

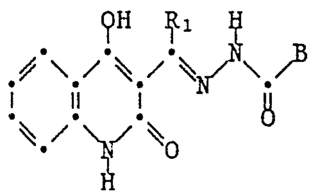 ,

(IV)

worin $R_1$ $-C_1$-$C_5$-Alkyl oder $-C_6H_5$ und B 2-, 3- oder 4-Pyridyl sind, und das Metallkation $Ni^{2+}$, $Cu^{2+}$ oder $Co^{2+}$ ist.

Von ganz besonderem Interesse ist hochmolekulares organisches Material enthaltend mindestens einen Metallkomplex der Formel IV, worin $R_1$ $-CH_3$, $-C_2H_5$ oder $-C_6H_5$, B 2-, 3- oder 4-Pyridyl und das Metallkation $Ni^{2+}$ oder $Cu^{2+}$ sind.

Die erfindungsgemäss in Frage kommenden Metallkomplexe aus einem Liganden der Formel I, worin A einen Phenylen-, Chlorphenylen- oder Methylphenylenrest, $R_1$ $-CH_3$ und B einen Pyridyl- oder Chinolinrest bedeuten, sind bekannt und z.B. in Curr. Sci. 45(4), 124-5 [=C.A. 84(24), 173120b], in J.Inorg.Nucl.Chem.42(3), 331-41 [=C.A.93(12), 124906q], 42(b), 821-31 [=C.A.94(2), 10506z] oder 43(1), 57-67 [=C.A. 94(22), 184712d], oder in Indian J. Chem., Sect. A, 20A(5), 520-3, beschrieben.

Die übrigen anmeldungsgemässen Metallkomplexe dagegen sind neu und stellen daher auch einen Erfindungsgegenstand dar.

Einen weiteren Erfindungsgegenstand stellen daher Metallkomplexe aus einem Liganden der Formel I

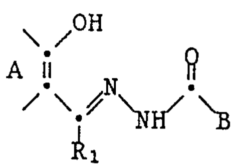 (I)

dar,

worin A einen carbocyclisch- oder heterocyclisch-aromatischen Rest und B einen carbocyclischen aromatischen Rest oder einen mindestens ein N-Atom enthaltenden heterocyclischen aromatischen Rest bedeuten, wobei mindestens einer der Reste A und B heterocyclisch sein muss, $R_1$ $-C_1$-$C_{18}$-Alkyl oder einen carbocyclischen aromatischen oder mindestens ein N-Atom enthaltenden heterocyclischen aromatischen Rest bedeutet, und das Metall ein zweifach positiv geladenes Uebergangsmetallkation $Ni^{2+}$, $Cu^{2+}$, $Co^{2+}$, $Zn^{2+}$, $Mn^{2+}$, $Fe^{2+}$, $Cd^{2+}$ oder $Pt^{2+}$ bedeutet oder für den Rest $VO^{2+}$ steht, wobei, wenn A Phenylen, Chlorphenylen oder Methylphenylen und $R_1$ Methyl bedeuten, B kein Pyridyl- oder Chinolinrest sein darf.

Bevorzugt sind Ni-, Cu-, Co- oder Zn-Komplexe, ganz bevorzugt aber Ni-und Cu-Komplexe gemäss obiger Definition.

Bevorzugte Metallkomplexe haben einen Liganden der obigen Formeln II oder III, worin Y -H oder -Cl, $Y_1$ -H, -Cl, -Br, $-CH_3$ oder $-OC_1$-$C_{18}$-Alkyl, $Y_2$ -H, -COOH, $-CONH_2$ oder eine unsubstituierte oder durch -Cl und/oder $-CH_3$ und/oder-$OCH_3$ substituierte Phenylcarbamoylgruppe, $R_1$ -$C_2$-$C_5$-Alkyl oder einen unsubstituierten oder durch -Cl, $-CH_3$ oder $-OCH_3$ substituierten Phenylrest, und B einen 2-, 3- oder 4-Pyridylrest bedeuten, und das Metallkation $Ni^{2+}$, $Cu^{2+}$, $Co^{2+}$ oder $Zn^{2+}$ ist.

Ganz bevorzugte Metallkomplexe haben einen Liganden der Formeln II und III, wobei Y -H, $Y_1$ -H, -Cl oder $-CH_3$, $Y_2$ -H, $R_1$ $-C_2H_5$ oder $-C_6H_5$ und B 2-, 3- oder 4-Pyridyl bedeuten, und das Metallkation $Ni^{2+}$, $Cu^{2+}$ oder $Co^{2+}$ ist.

Besonders bevorzugt sind Metallkomplexe mit einem Ligand der Formel II, worin Y und $Y_1$ -H, $R_1$ $-C_2H_5$ oder $-C_6H_5$ und B 2-, 3- oder 4-Pyridyl sind, und das Metallkation $Ni^{2+}$ oder $Cu^{2+}$ ist.

Ebenfalls bevorzugt sind Metallkomplexe aus einem Liganden der Formel IV

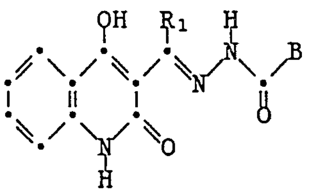 ,

(IV)

worin $R_1$ -$C_1$-$C_5$-Alkyl oder $-C_6H_5$ und B 2-, 3- oder 4-Pyridyl bedeuten, und das Metallkation $Ni^{2+}$, $Cu^{2+}$ oder $Co^{2+}$ ist.

Ganz bevorzugt sind Metallkomplexe obiger Formel IV, worin $R_1$ $-CH_3$, $-C_2H_5$ oder $-C_6H_5$, B 2-, 3- oder 4-Pyridyl und das Metallkation $Ni^{2+}$ oder $Cu^{2+}$ bedeuten.

Sowohl die bekannten als auch die neuen Metallkomplexe aus den Liganden der Formel I können nach an und für sich bekannten Verfahren hergestellt werden, indem man z.B. eine Verbindung der Formel V

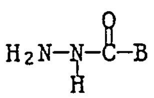 (V),

worin B die oben angegebene Bedeutung hat, mit einem Keton der Formel VI

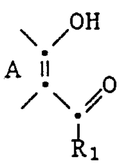 (VI)

oder einem Ketimin der Formel VII

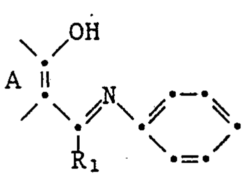 (VII),

worin A und $R_1$ die oben angegebene Bedeutung haben, in einem inerten Lösungsmittel kondensiert und während oder nach der Kondensation ein zweiwertiges Metallkation gemäss obiger Definition zusetzt.

Die Ausgangsprodukte der Formeln V, VI und VII können nach bekannten Verfahren, wie z.B. in der GB-Patentschrift Nr. 1467595 (S. 9 - 10) beschrieben, hergestellt werden.

Als Beispiele für Verbindungen der Formel VI seien genannt:
2-Hydroxy-acetophenon, 2-Hydroxy-3-, -4- oder -5-chlor-acetophenon, 2-Hydroxy-3-, -4- oder -5-methyl-acetophenon, 2-hydroxy-5-t.butyl-acetophenon, 2-Hydroxy-3-, -4- oder -5-methoxy-acetophenon, 2-Hydroxy-5-ethoxy-acetophenon, 2-Hydroxy-benzophenon, 2-Hydroxy-5-chlor-benzophenon, 2-Hydroxy-4-chlor-benzophenon, 2-Hydroxy-5-methyl-benzophenon, 2-Hydroxy-4-methyl-benzophenon, 2-Hydroxy-3-methoxy-benzophenon, 2-Hydroxy-4-methoxy-benzophenon, 2-Hydroxy-5-methoxy-benzophenon, 2-Hydroxy-4,4′-dichlorbenzophenon, 2-Hydroxy-5,4′-dichlor-benzophenon, 2-Hydroxy-4-octoxy-benzophenon, 2-Hydroxy-4-dodecanoxy-benzophenon, 2′-Hydroxy-dodecanophenon, 2-Hydroxypropiophenon, Dehydracetsäure (= 3-Acetyl-4-hydroxy-6-methyl-2-pyron), 3-Acetyl-2,4-dihydroxy-6-methylpyridin, 3-Acetyl-2,4-dihydroxychinolin und 3-Acetyl-2,4-dihydroxy-cumarin.

Nach diesem Verfahren können sowohl die 1:1- als auch die 1:2-Metallkomplexe hergestellt werden. In der

Regel fördern elektronenanziehende Gruppen in den Resten A oder B und ein Ueberschuss an Metallkationen abgebendem Mittel die Bildung der 1:1-Metallkomplexe.

Als zweiwertige Metallkationen abgebende Mittel eignen sich Salze oder Komplexverbindungen der obigen Metalle, insbesondere die Formiate, die Stearate, die Chloride, die Nitrate, die Sulfate oder Acetylacetonate, vor allem aber die Acetate.

Als inertes Lösungsmittel kann man z.B. ein organisches Lösungsmittel oder aber auch Wasser verwenden. Es können auch Mischungen derartiger Lösungsmittel eingesetzt werden.

Als organische Lösungsmittel eignen sich insbesondere z.B. Ethanol, Butanol, Essigsäure, Dioxan, Formamid, Dimethylformamid, Dimethylacetamid, Ethylcellosolve, Ethylenglykolmonomethylether, Nitrobenzol, N-Methylpyrrolidon, Dimethylsulfoxid oder Acetonitril.

Die Umsetzungstemperaturen liegen zweckmässig zwischen 50° C und dem Siedepunkt des verwendeten Lösungsmittels bzw. Lösungsmittelgemisches.

Die Isolierung des erhaltenen Metallkomplexes erfolgt wie üblich z.B. durch Filtration. Das Nutschgut wird mit Lösungsmittel gut gewaschen. Es wird im allgemeinen in guter Ausbeute und Reinheit erhalten und kann ohne weitere Reinigung in feinverteilter Form zum Färben von hochmolekularem organischem Material verwendet werden.

Die wie beschrieben hergestellten Metallkomplexe enthalten häufig Wasser oder kleine Mengen organischen Lösungsmittels in gebundener Form, die durch Trocknen bei Temperaturen bis auf 100° C nicht entfernt werden können.

Sofern ihre Reinheit und/oder Partikel-Form und -Grösse noch nicht genügend bzw. optimal sind, können die anmeldungsgemässen Metallkomplexe weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung oder durch Salzknetung oder durch eine nachträgliche thermische Lösungsmittelbehandlung.

Thermische Lösungsmittelbehandlungen können z.B. in organischen Lösungsmitteln, vorzugsweise mit solchen, die über 100° C sieden, durchgeführt werden.

Als besonders geeignet hierfür erweisen sich durch Halogenatome, Alkyl-oder Nitrogruppen substituierte Benzole, wie Xylole, Chlorbenzol, o-Dichlorbenzol oder Nitrobenzol, Alkohole, wie Isopropanol oder Isobutanol, ferner Ketone, wie Cyclohexanon, Ether, wie Ethylenglykolmonomethyl- oder -monoethylether, Amide, wie Dimethylformamid oder N-Methyl-pyrrolidon, sowie Dimethylsulfoxyd, Sulfolan oder Wassser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen, oder in flüssigem Ammoniak, durchführen.

Je nach Konditionsverfahren und/oder Applikationszweck kann es von Vorteil sein, dem anmeldungsgemässen Metallkomplex gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol, oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Hochmolekulares organisches Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseether oder Ester, wie Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt: Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS oder EVA.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B Alkydharze, als auch ungesättigte, wie beispielsweise Maleinatharze, ferner die linearen Polyester und Polyamide oder Silikone genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den definitionsgemässen Metallkomplexen erfolgt beispielsweise derart, dass man ein solches Metallkomplexpigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form

gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung des Pigmentes in die Polymeren eingearbeitet werden. Es ist ferner möglich, zwecks Erzielung verschiedener Farbtöne den hochmolekularen organischen Stoffen neben den Metallkomplexpigmenten noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und Metallkomplexpigmente gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erste hierauf alle Komponenten zusammenbringt.

Werden die anmeldungsgemässen Metallkomplexpigmente in Kunstoffe oder Fasern eingearbeitet, so stabilisieren sie diese gegen die Einflüsse von Licht und Wetter. Aus den gefärbten Substraten hergestellte Gegenstände zeichnen sich durch eine längere Gebrauchsdauer aus.

Werden die anmeldungsgemässen Metallkomplexe in lichtstabilisiertes hochmolekulares organisches Material eingearbeitet, so wird in der Regel dessen Lichtstabilität nicht beeinträchtigt. Gegebenenfalls lässt sich auch eine synergistische Verbesserung der Beständigkeit gegenüber Licht beobachten.

Die erhaltenen Färbungen enthalten vorzugsweise 0,01-20 Gew.% eines definitionsgemässen Metallkomplexpigmentes, beispielsweise in Kunststoffen, Fasern, Lacken und Drucken, und zeichnen sich durch gute allgemeine Pigmenteigenschaften, wie Ueberlackier-, Migrations-, Hitze-, Licht- und Wetterbeständigkeit, sowie durch eine gute Farbstärke und einen guten Glanz, insbesondere aber durch eine sehr gute Dispergierbarkeit, aus.

Wenn die definitionsgemässen Metallkomplexe, insbesondere diejenigen, die Alkoxy- oder Alkylestergruppen mit langkettigen Resten enthalten, in den angewandten Polymeren, z.B. in Polyolefinen, insbesondere in Polypropylen, sehr fein verteilt vorliegen, zeichnen sie sich ebenfalls durch einen reinen Farbton, gute Farbstärke, Licht- und Textilechtheiten, wie Reib-, Lösungsmittel-, Shampoo- und Waschechtheit aus.

In den nachfolgenden Beispielen bedeuten die Teile, sofern nichts anderes angegeben wird, Gewichtsteile und die Prozente Gewichtsprozente.

Beispiel 1:

Ein Gemisch aus 15,0 g 2-Hydroxypropiophenon und 13,7 g Nicotinsäurehydrazid wird in 100 ml Ethylcellosolve zuerst während 18 Stunden bei 120°C (unter Abdestillieren von wenig Lösungsmittel) und anschliessend während weiterer 5 Stunden bei Raumtemperatur gerührt. Der ausgefallene hellgelbe Niederschlag wird abgesaugt, mit Ethanol und dann mit Wasser gewaschen. Nach Trocknen des Produktes bei 40 - 50°C im Vakuum erhält man 18,5 g 2-Hydroxypropiophenon-nicotinoylhydrazon. 2,7 g dieses Produktes werden in 30 ml Dimethylformamid suspendiert und mit einer Lösung von 2,8 g Nickel-II-acetat·4 $H_2O$ in 35 ml Dimethylformamid versetzt. Das erhaltene Gemisch wird bei 120°C während 4 Stunden gerührt, darauf wird das Produkt abfiltriert und anschliessend mit Isopropanol und dann mit Wasser gewaschen. Nach Trocknung des Produktes im Vakuum bei 60 - 70°C erhält man 2,8 g eines gelben Pulvers der nachstehenden Formel (oder einer tautomeren Form davon):

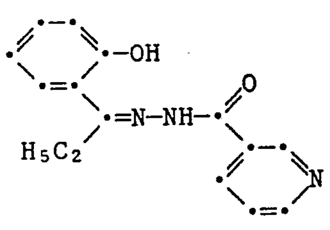

als 1:1-Nickelkomplex mit folgender Mikroanalyse:

| | Ni (in %) |
|---|---|
| Berechnet (für $C_{15}H_{13}N_3O_2Ni$): | 17,95 |
| Gefunden: | 18,10 |

Beispiel 2:

21,5 g 2-Hydroxypropiophenon und 20,7 g Isonicotinsäurehydrazid werden in 200 ml Isopropanol während 18 Stunden bei 80°C gerührt. Das Reaktionsprodukt wird bei 40°C abfiltriert, mit Isopropanol gewaschen und bei 50°C unter Vakuum getrocknet. Man erhält 19,4 g 2-Hydroxypropiophenon-isonicotinoylhydrazon mit folgender Mikroanalyse

| (in %) | C | H | N | O |
|---|---|---|---|---|
| Berechnet (für $C_{15}H_{15}N_3O_2$): | 66,9 | 5,6 | 15,6 | 11,9 |
| Gefunden: | 66,5 | 5,6 | 16,1 | 12,0 |

und mit folgendem Schmelzpunkt: 225 - 231°C. Zu einer gerührten Suspension von 296 g obigen 2-Hydroxypropiophenon-isonicotinoylhydrazons in 5,5 Litern Wasser gibt man 7,5 g des Dispergators ®Marlon A 375 (der Firma HUELS, Marl BRD) und 111 ml 30 %ige NaOH. Man versetzt die so entstandene hellgelbe Lösung mit 110 g Phosphorsäure in 950 ml Wasser. Die ausgefallene gelbe Suspension wird während 1 Stunde bei Raumtemperatur gerührt, und 263 g Nickelchlorid. 6 $H_2O$ in 1,6 Liter Wasser werden während 0,5 Stunden zugetropft. Der pH-Wert der Suspension wird dabei mit 15 %iger NaOH auf 8 - 8,5 gehalten. Der orange Niederschlag wird während 5 Stunden bei 95°C gerührt. Anschliessend wird der pH-Wert der Suspension mit Eisessig auf 5 gestellt, das Produkt wird abfiltriert, mit Wasser gewaschen und bei 80°C im Vakuum getrocknet. Man erhält 330 g eines gelben Pulvers der folgenden Formel

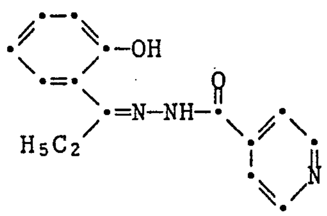

als 1:1-Nickelkomplex und mit folgender Mikroanalyse

| (in %) | C | H | N | Ni |
|---|---|---|---|---|
| Berechnet (für $C_{15}H_{13}N_3O_2Ni$): | 55,3 | 4,0 | 12,9 | 17,95 |
| Gefunden: | 55,3 | 4,2 | 12,5 | 17,6 |

Beispiel 3:

5,7 g 2-Hydroxypropiophenon und 5,5 g Isonicotinsäurehydrazid werden in 300 ml N-Methylpyrrolidon während 4 Stunden bei 120 - 130°C gerührt. Danach wird die hellgelbe Lösung mit 10,2 g Nickelacetat.4 $H_2O$ versetzt, und das erhaltene Gemisch wird bei gleicher Temperatur während 18 Stunden weitergerührt. Der rotgelbe Metallkomplex wird bei 100°C abfiltriert, mit Ethanol und dann mit Wasser gut gewaschen. Nach Trocknung des Produktes im Vakuum bei 70 - 80°C erhält man 9,5 g eines gelben Pulvers der Formel gemäss obigem Beispiel 2 und mit folgender Mikroanalyse:

| | Ni (in %) |
|---|---|
| Berechnet (für $C_{15}H_{13}N_3O_2Ni$): | 18,0 |
| Gefunden: | 18,3 |

Beispiel 4:

21,5 g 2-Hydroxypropiophenon und 20,6 g Picolinsäurehydrazid werden in 250 ml Ethylcellosolve während 18 Stunden bei 110°C und anschliessend während 2 Stunden bei Raumtemperatur gerührt. Die hellgelbe Lösung wird am Rotationsverdampfer auf ca. 50 Volumen % eingeengt. Die ausgefallenen gelben Kristalle werden abfiltriert, mit Isopropanol und dann mit Wasser gewaschen. Nach Trocknung der Kristalle im Vakuum bei 50°C erhält man 18 g 2-Hydroxypropiophenon-picolinoylhydrazon mit folgender Mikroanalyse:

| (in %) | C | H | N | O |
|---|---|---|---|---|
| Berechnet (für $C_{15}H_{15}N_3O_2$): | 66,9 | 5,6 | 15,6 | 11,8 |
| Gefunden: | 66,8 | 5,5 | 15,8 | 11,9 |

und mit einem Schmelzpunkt von 136 - 139°C. 2,7 g 2-Hydroxypropiophenon-picolinoylhydrazon werden in 40 ml Dimethylformamid mit 2,2 g Kupfer-II-acetat.$H_2O$ während 4 Stunden bei 120°C umgesetzt. Der erhaltene grüngelbe Metallkomplex wird bei Raumtemperatur abfiltriert, mit Isopropanol und dann mit Wasser gewaschen und bei 80°C unter Vakuum getrocknet. Man erhält 2,8 g einer Verbindung der Zusammensetzung

$C_{15}H_{13}N_3O_2Cu$, was einem 1:1 $Cu^{2+}$-Komplex folgender Formel entspricht:

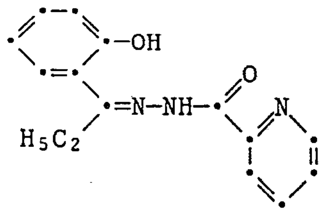

als 1:1-Cu Komplex.

Beispiel 5:

Ein Gemisch aus 35,2 g 2-Hydroxy-4-methoxy-benzophenon und 20,8 g Isonicotinsäurehydrazid wird in 150 ml Ethylcellosolve während 18 Stunden bei 120°C gerührt, das erhaltene Gemisch wird dann auf Raumtemperatur abgekühlt und filtriert. Das Nutschgut wird mit Isopropanol und anschliessend mit Wasser gewaschen, dann im Vakuum bei 50 - 60°C getrocknet. Man erhält 11,5 g 2-Hydroxy-4-methoxy-benzophenon-isonicotinoylhydrazon.

3,5 g dieses Produktes werden in 45 ml Dimethylformamid gelöst und mit 2,7 g Nickel-II-acetat.4 $H_2O$ in 30 ml Wasser versetzt. Man rührt die Reaktionsmischung während 5 Stunden bei 95°C. Die ausgefallenen roten Kristalle werden abfiltriert, mit Isopropanol und dann mit Wasser gewaschen. Nach dem Trocknen des Produktes im Vakuum bei 80 - 90°C erhält man 3,3 g eines rotgelben Pulvers der Formel

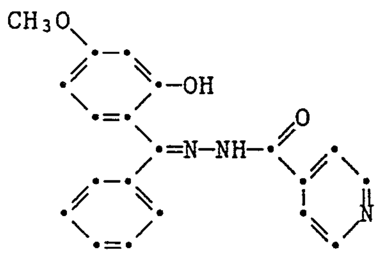

als 1:1-Nickelkomplex.

Beispiel 6:

47,0 g 2-Hydroxy-4-methoxybenzophenon und 27,7 g Picolinsäurehydrazid werden in 150 ml N-Methylpyrrolidon während 18 Stunden bei 140°C gerührt. Nach dem Abkühlen des Reaktionsgemisches auf Raumtemperatur wird die braungelbe Lösung mit 20 ml Wasser versetzt. Man filtriert den ausgefallenen Niederschlag ab, und wäscht ihn mit Isopropanol und dann mit Wasser. Nach Trocknen des Produktes im Vakuum bei 50 - 60°C erhält man 57,4 g 2-Hydroxy-4-methoxybenzophenon-picolinoylhydrazon.

3,5 g dieses Produktes werden in 45 ml Dimethylformamid suspendiert und mit einer Lösung von 2,7 g Kobalt-II-acetat.4 $H_2O$ in 30 ml Wasser versetzt. Das erhaltene Gemisch wird bei 95°C während 5 Stunden unter Stickstoff gerührt, darauf wird das Produkt abfiltriert und anschliessend mit Isopropanol und dann mit Wasser gewaschen. Nach Trocknung des Produktes im Vakuum bei 70 - 80°C erhält man 3,0 g eines gelben Pulvers der Formel

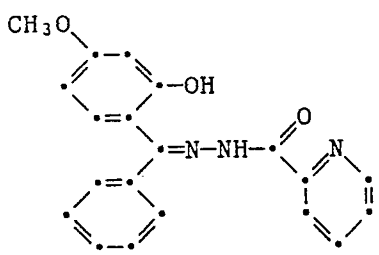

als 1:1-Kobaltkomplex mit folgender Mikroanalyse

| (in %) | C | H | N | Co |
|---|---|---|---|---|
| Berechnet (für $C_{20}H_{15}N_3O_3Co$): | 59,4 | 3,7 | 10,4 | 14,6 |
| Gefunden: | 59,2 | 3,7 | 10,3 | 13,9 |

Beispiel 7:

32,6 g 4-Octyloxy-2-hydroxybenzophenon und 13,8 g Isonicotinsäurehydrazid werden analog dem Beispiel 6 kondensiert. Man erhält 36 g 4-Octyloxy-2-hydroxybenzophenon-isonicotinoylhydrazon mit folgender Mikroanalyse:

| (in %) | C | H | N | O |
|---|---|---|---|---|
| Berechnet (für $C_{27}H_{31}N_3O_3$): | 72,8 | 7,0 | 9,4 | 10,8 |
| Gefunden: | 72,6 | 7,0 | 9,2 | 10,6 |

Schmelzpunkt: 146 - 148° C. Eine Lösung von 4,5 g 4-Octyloxy-2-hydroxybenzophenon-isonicotinoylhydrazon in 30 ml Dimethylformamid wird bei 80° C mit einer Lösung von 2,7 g Nickel-II-acetat.4 $H_2O$ in 30 ml Dimethylformamid versetzt. Das Reaktiongemisch wird während 5 Stunden bei 100° C gerührt und anschliessend auf Raumtemperatur abgekühlt. Der erhaltene gelbe Metallkomplex wird abfiltriert, mit Isopropanol und dann mit Wasser gewaschen, und bei 80° C unter Vakuum getrocknet. Man erhält 4,6 g einer Verbindung der Zusammensetzung $C_{27}H_{29}N_3O_3Ni$, was einem 1:1-$Ni^{2+}$-Komplex folgender Formel entspricht:

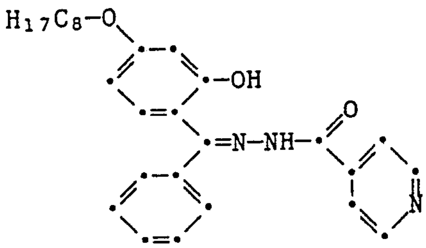

als 1:1 Nickelkomplex und mit folgender Mikroanalyse:

| (in %) | C | H | N | Ni |
|---|---|---|---|---|
| Berechnet: | 64,6 | 5,8 | 8,4 | 11,7 |
| Gefunden: | 64,6 | 5,7 | 8,4 | 11,7 |

Beispiel 8:

20,3 g 3-Acetyl-2,4-dihydroxychinolin und 13,8 g Isonicotinsäurehydrazid werden in 180 ml Ethylcellosolve analog dem Beispiel 1 kondensiert. Man erhält 27,2 g 3-Acetyl-2,4-dihydroxychinolin-isonicotinoylhydrazon. 3,2 g davon werden in 25 ml Dimethylformamid suspendiert und mit einer Lösung von 2,7 g Nickel-II-acetat.4 $H_2O$ in Dimethylformamid versetzt. Das erhaltene Gemisch wird während 2 Stunden bei 80 - 90° C gerührt, darauf wird das Produkt abfiltriert und anschliessend mit Isopropanol und dann mit Wasser gewaschen. Nach Trocknung des Produktes im Vakuum bei 70 - 80° C erhält man 3,5 g eines gelben Pulvers der nachstehenden Formel

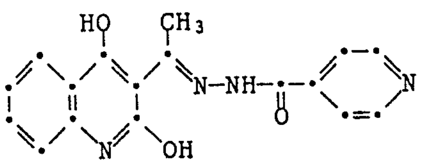

als 1:1-Nickelkomplex, mit folgender Mikroanalyse

| (in %) | C | H | N | Ni | $H_2O$ |
|---|---|---|---|---|---|
| Berechnet (für $C_{18}H_{13}N_4O_3Ni$): | 53,7 | 3,4 | 14,7 | 15,5 | - |
| Gefunden: | 52,7 | 3,6 | 14,6 | 14,9 | 1.8 |

Beispiel 9:

In einer 3 L-Glasflasche werden 1 g des nach Beispiel 5 hergestellten Pigmentes, 10 g Titandioxid (Qualität CL 220 der Firma KRONOS, Leverkusen BRD) und 1000 g Polyethylen-HD Granulat (®Vestolen A 6016 der Firma Hüls BRD) während 15 min. gemischt. Die erhaltene Mischung wird zweimal bei 200° C durch einen Kleinextruder (Typ 133 der Firma COLLIN, Ebersberg BRD) gepresst und anschliessend jeweils granuliert. Aus dem so eingefärbten Granulat werden bei 200° C in einem Spritzautomaten (Aarburg 200 D der Firma AARBURG, Lossburg BRD) Plättchen von ca. 3,5 x 4,5 x 0,2 cm gespritzt. Dann heizt man die Schmelzzone auf

280° C und spritzt nach 5 Minuten Verweilzeit weitere Plättchen der oben angegebenen Dimensionen. Die sowohl bei 200° C als auch bei 280° C hergestellten Plättchen weisen eine ähnliche farbstarke gelbe Nuance mit ausgezeichneten Beständigkeiten auf.

Beispiele 10 - 19:

Ebenfalls echte gelbe bis orange Metallkomplexe erhält man, wenn man analog den Beispielen 1 - 8 arbeitet, jeweils eine der in Tabelle 1 angegebenen Carbonylverbindungen der Formel R, ein Hydrazid der Formel $H_2NNHCOB$ enthaltend einen Rest B, und ein Metallkationen M abgebendes Mittel der angegebenen Bedeutung einsetzt. Appliziert man diese Metallkomplexe in HDPE, wie im Beispiel 9 beschrieben, so erhält man die in der letzten Kolonne der Tabelle 1 angegebenen Farbtöne. Die Metallkomplexe entsprechen der folgenden Formel

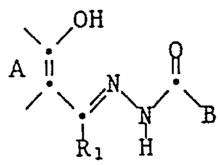

als 1:1-Metallkomplex, worin A, $R_1$, B und das Metall die in Tabelle 1 angegebene Bedeutung haben.

Tabelle 1

| Beispiel Nr. | R | Struktur gemäss obiger Formel B | A | $R_1$ | M | Farbton in HDPE |
|---|---|---|---|---|---|---|
| 10 | 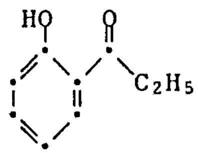 | 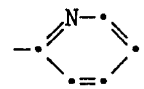 | 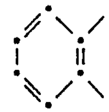 | $-C_2H_5$ | Cu | grünstichig gelb |
| 11 | 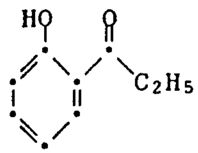 | 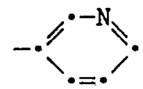 | 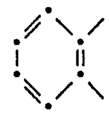 | $-C_2H_5$ | Cu | grünstichig gelb |
| 12 | 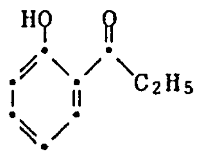 | 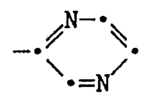 | 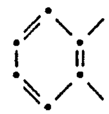 | $-C_2H_5$ | Ni | rotstichig gelb |
| 13 | 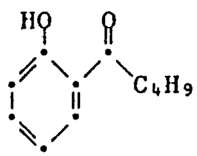 | 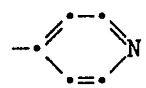 | 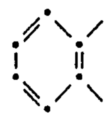 | $-C_4H_9$ | Ni | rotstichig gelb |
| 14 | 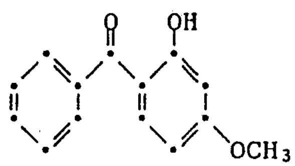 | 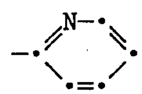 | 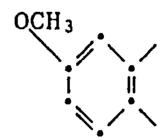 | $-C_6H_5$ | Cu | gelb |

Tabelle 1 (Fortsetzung)

| Beispiel Nr. | R | Struktur gemäss obiger Formel B | A | $R_1$ | M | Farbton in HDPE |
|---|---|---|---|---|---|---|
| 15 | 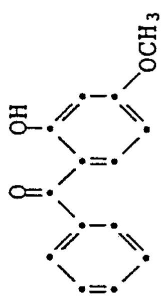 | 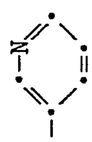 | 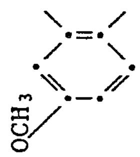 | $-C_6H_5$ | Ni | gelb |
| 16 | 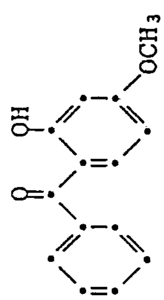 | 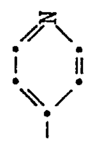 | 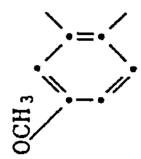 | $-C_6H_5$ | Cu | gelb |
| 17 | 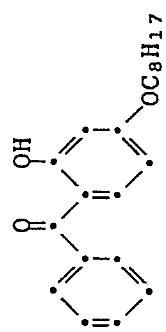 | 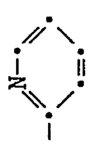 | 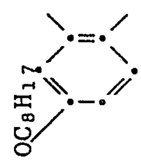 | $-C_6H_5$ | Cu | grünstichig gelb |
| 18 | 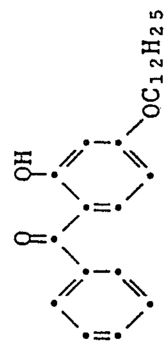 | 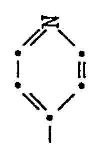 | 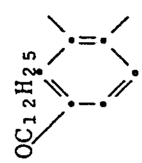 | $-C_6H_5$ | Ni | rotstichig gelb |
| 19 | 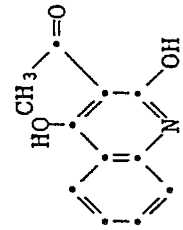 | 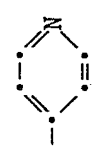 | 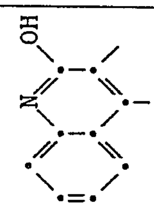 | $-CH_3$ | Ni | rotstichig gelb |

Beispiel 20

In einer 3 L-Glasflasche werden 1 g des nach Beispiel 2 hergestellten Pigmentes, 10 g Titandioxid (Qualität CL 220 der Firma KRONOS, Leverkusen BRD) und 1000 g des Kunststoffs ABS (®Terluran 877M der Firma BASF) während 15 Minuten gemischt. Die erhaltene Mischung wird zweimal bei 190°C durch einen Kleinextruder (Typ 133 der Firma COLLIN, Ebersberg BRD) gepresst und anschliessend jeweils granuliert. Dann wird das Material während 4 Stunden bei 90°C getrocknet (Granulat-Trockner TE 25 der Firma MAPAG,Bern CH). Aus dem so gefärbten Granulat werden bei 200°C in einem Spritzautomaten (Aarburg 200 D der Firma AARBURG, Lossburg BRD) Plättchen von ca. 3,5 x 4,5 x 0,2 cm gespritzt. Dann heizt man die Schmelzzone auf 260°C und spritzt nach 5 Minuten Verweilzeit weitere Plättchen der oben angegebenen

Dimensionen. Die sowohl bei 200° C als auch bei 260° C hergestellten Plättchen weisen eine ähnliche rotstichig gelbe Nuance auf und zeichnen sich durch eine gute Lichtbeständigkeit aus.

Beispiel 21:

In einer 3 L-Glasflasche werden 1 g des nach Beispiel 3 hergestellten Pigmentes, 10 g Titandioxid (Qualität CL 220 der Firma KRONOS Leverkusen BRD) und 1000 g eines Polycarbonats (®Macrolon 2800 der Firma BASF) während 15 Minuten gemischt und während 4 Stunden bei 120° C vorgetrocknet. Die erhaltene Mischung wird zweimal bei 260° C durch einen Kleinextruder (Typ 133 der Firma COLLIN, Ebersberg BRD) gepresst und anschliessend jeweils granuliert. Dann wird das Material während 4 Stunden bei 120° C getrocknet (Granulat-Trockner TE 25 der Firma MAPAG, Bern CH).

Aus dem so gefärbten Granulat werden bei 280° C in einem Spritzautomaten (Aarburg 200 D der Firma AARBURG, Lossburg BRD) Plättchen von ca. 3,5 x 4,5 x 0,2 cm gespritzt. Dann heizt man die Schmelzzone zuerst auf 300° C, dann auf 340° C und spritzt nach jeweils 5 Minuten Verweilzeit weitere Plättchen der oben angegebenen Grösse.

Die bei 280° C, 300° C und 340° C hergestellten Plättchen weisen eine ähnliche rotstichig gelbe Nuance auf und zeichnen sich durch eine gute Lichtbeständigkeit aus.

Beispiel 22:

2 g des nach Beispiel 2 hergestellten Pigmentes, 50 g Titandioxid und 1000 g Polyamid 6 (®Ultramid B3K der Firma BASF) werden gut gemischt und 4 Std. bei 120° C vorgetrocknet. Die erhaltene Mischung wird zweimal bei 220° C extrudiert, dann granuliert und wiederum 4 Std. bei 120° C getrocknet. Das so hergestellte gefärbte Granulat wird bei 220° C, 260° C und 280° C, jeweils nach 5-minutigem Verweilen bei diesen Temperaturen zu Plättchen verspritzt. Man erhält farbstarke, rotstichig gelbe Ausfärbungen mit sehr guter Lichtbeständigkeit.

Beispiel 23:

1 g des nach Beispiel 3 hergestellten Pigmentes, 10 g Titandioxid und 1000 g des Mischpolymers ®Xenoy (Pulverqualität der Firma GENERAL ELECTRIC, Bergen NL) werden gut gemischt. Die Mischung wird zweimal bei 250° C extrudiert, dann granuliert und bei 120° C während 4 Stunden getrocknet. Das so hergestellte gefärbte Granulat wird bei 260° C, 280° C und 290° C, jeweils nach 5-minutigem Verweilen bei diesen Temperaturen zu Plättchen verspritzt. Man erhält rotstichig gelbe Ausfärbungen mit sehr guter Lichtbeständigkeit.

Beispiel 24:

1 g des nach Beispiel 2 hergestellten Pigmentes und 1000 g des Kunststoffs Polyethylenterephthalat (PETP, ®Melinor B90 der Firma ICI) werden während 15 Minuten gemischt und während 4 Stunden bei 90° C vorgetrocknet. Die Mischung wird zweimal bei 270° C extrudiert, dann granuliert und wiederum bei 90° C während 4 Stunden getrocknet. Das so hergestellte gefärbte Granulat wird bei 270° C, 280° C, 290° C und 300° C jeweils nach 5-minutigem Verweilen bei diesen Temperaturen zu Plättchen verspritzt. Man erhält rotstichig gelbe Ausfärbungen mit sehr guter Lichtbeständigkeit.

Beispiele 25 - 34:

Ebenfalls echte gelbe bis orange Ausfärbungen in ABS, Polycarbonat, Polyamid, ®Xenoy und PETP erhält man, wenn man analog den Beispielen 20 - 24 arbeitet, jedoch anstelle des dort verwendeten Pigmentes einen 1:1-Metallkomplex eines in Tabelle 2 aufgeführten Liganden, hergestellt aus einem 2-Hydroxyketon der Formel R (Kolonne 2) und einem Hydrazid der Formel $H_2NNHCOB$ enthaltend den Rest B (Kolonne 3), einsetzt. Die Nuance der ABS-Ausfärbung ist in Kolonne 7 angegeben.

Tabelle 2

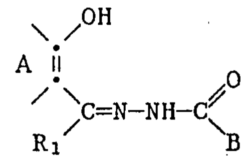

als 1:1-Metallkomplex

| Beispiel Nr. | R | Struktur gemäss obiger Formel B | A | $R_1$ | M | Nuance in ABS |
|---|---|---|---|---|---|---|
| 25 | 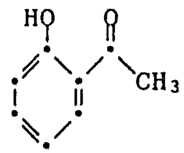 | 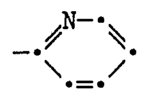 | 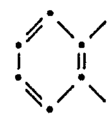 | $-CH_3$ | Cu | grünstichig gelb |
| 26 | 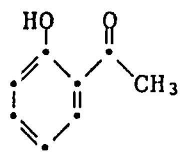 | 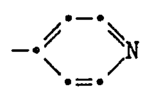 | 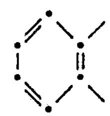 | $-CH_3$ | Cu | grünstichig gelb |
| 27 | 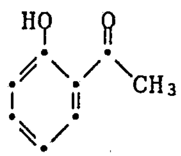 | 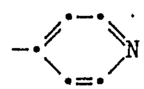 | 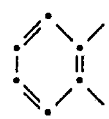 | $-CH_3$ | Ni | rotstichig gelb |
| 28 | 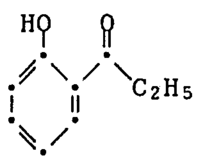 | 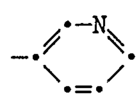 | 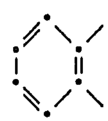 | $-C_2H_5$ | Cu | grünstichig gelb |
| 29 | 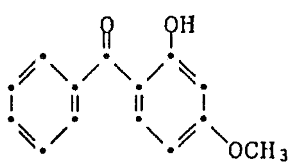 | 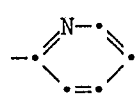 | 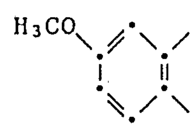 | $-C_6H_5$ | Cu | grünstichig gelb |

Tabelle 2 (Fortsetzung)

| Beispiel Nr. | R | Struktur gemäss obiger Formel B | A | $R_1$ | M | Nuance in ABS |
|---|---|---|---|---|---|---|
| 30 | 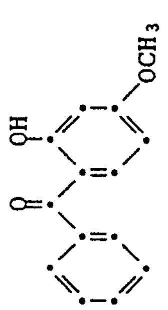 | 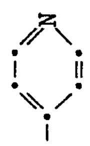 | 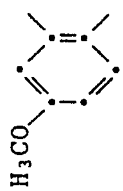 | $-C_6H_5$ | Cu | grünstichig gelb |
| 31 | 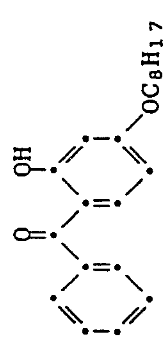 | 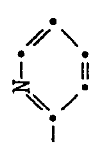 | 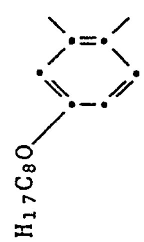 | $-C_6H_5$ | Cu | grünstichig gelb |
| 32 | 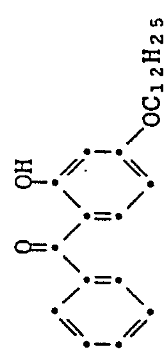 | 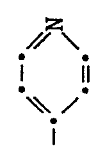 | 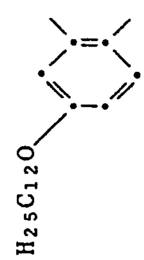 | $-C_6H_5$ | Ni | gelb |
| 33 | 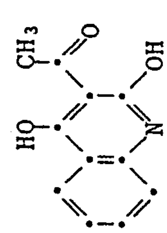 | 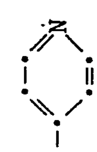 | 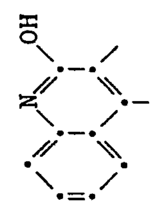 | $-CH_3$ | Ni | gelb |
| 34 | 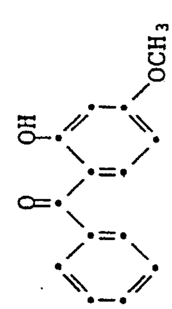 | 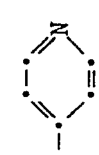 | 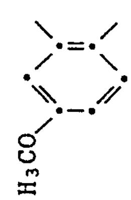 | $-C_6H_5$ | Ni | gelb |

Beispiel 35:

37,5 g 2-Hydroxy-propiophenon werden zu einer Lösung von 25,1 ml 30 %iger Natronlauge in 50 ml Wasser während 15 Minuten getropft und anschliessend mit 34,6 g Isonicotinsäurehydrazid versetzt. Die gelbe Suspension wird während einer Stunde bei 80° C gerührt und bei der erwähnten Temperatur klärfiltriert. Zum Filtrat gibt man 1000 ml Wasser, anschliessend 1,87 g des Dispergators ®Marlon A 375 (der Firma Huels, Marl BRD), 55 ml Phosphorsäure (3 Molar) und während ca. 15 Minuten 62,3 g Nickelchlorid·6 $H_2O$ in 200 ml Wasser. Der pH-Wert der Suspension wird dabei mit 15 %-iger NaOH auf 8 - 8,5 gehalten. Es fällt ein oranger Niederschlag aus. Die Reaktionsmischung wird während 5 Stunden bei 95° C gerührt. Anschliessend wird der

pH-Wert der Suspension mit Eisessig auf 5 gestellt, das Produkt wird abfiltriert und mit Wasser gewaschen. Das feuchte Nutschgut wird in 2500 ml Wasser und 14 ml Eisessig suspendiert und bei 90 - 95° C während 3 Stunden gerührt. Der rotgelbe Metallkomplex wird bei 80 - 90° C abfiltriert und mit heissem Wasser gut gewaschen. Nach Trocknung des Produktes im Vakuum bei 100° C erhält man 73,1 g eines gelben Pulvers der Formel gemäss Beispiel 2.

Beispiel 36:

5 g des gemäss Beispiel 34 erhaltenen 1:1-Nickelkomplexes werden mit 95 g eines Alkyd-Melaminharzlakkes, zusammengesetzt aus 34,2 g ®Beckosol 27 - 320 der Firma Hoechst, BRD, 17,1 g ®Super Beckamin 13 - 501 der Firma Reichhold Chemie, Wien A, 41,8 g Xylol und 1,9 g Methylglykol während 72 Stunden in einer Kugelmühle dispergiert.

Für die Herstellung einer Volltonlackierung wird der eingefärbte Volltonlack auf eine Aluminiumfolie gespritzt, 30 Minuten bei Raumtemperatur vorgetrocknet und anschliessend während 30 Minuten bei 130° C eingebrannt. Die so hergestellte gelbe Lackierung zeigt eine sehr gute Licht-, Wetter- und Ueberlackierbeständigkeit.

Für die Herstellung einer Weissverschnittausfärbung werden 7 g der Volltondispergierung zusammen mit 33,25 g Weisslack (enthält 20 % Titandioxid RN 59 der Firma KRONOS, Leverkusen BRD), Verschnittverhältnis 5 Teile Buntpigment zu 95 Teilen Weisspigment, vermischt und bei gleichen Bedingungen wie bei der Volltonlackierung appliziert. Man erhält eine gelbe, farbstarke Weissverschnittlackierung mit guter Licht- und Wetterbeständigkeit.

Beispiel 37:

Ein zur Faserherstellung geeignetes Polypropylengranulat wird mit 1 % des Nickelkomplexes gemäss Beispiel 17 gründlich gemischt. Die Mischung wird auf einer Schmelzspinnanlage bei 260 - 285° C zu Fäden versponnen, die anschliessend auf einer Streckzwirnanlage im Verhältnis 1:4 verstreckt und aufgespult werden. Man erhält eine kräftige gelbe Färbung, die sich durch gute Lichte-, Wäsche-, Shampoo- und Lösungsmittel(Perchlorethylen)-Echtheiten auszeichnet.

Beispiel 38:

Ein zur Faserherstellung geeignetes Polypropylengranulat wird mit 5 % eines Pigmentpräparates, enthaltend 20 % des Nickelkomplexes gemäss Beispiel 2, gründlich gemischt. Die Mischung wird auf einer Schmelzspinnanlage bei 260 - 285° C zu Fäden versponnen, die anschliessend auf einer Streckzwirnanlage im Verhältnis 1:4 verstreckt und aufgespult werden. Man erhält eine kräftige gelbe Färbung, die sich durch gute Licht-, Wäsche-, Trockenreinigungs-, Abgas- und Peroxydbleichechtheiten auszeichnet.

Bei sonst analoger Arbeitsweise erhält man ebenfalls sehr echte, gelbe Ausfärbungen, wenn man anstelle von Polypropylen Polycaprolactamgranulat verwendet, und die Mischung bei 260 - 290° C zu Fäden verspinnt. Diese Färbungen zeichnen sich durch gute Nassechtheiten, insbesondere Wasch- und Shampoo-Echtheiten, sowie Reibechtheiten und Lösungsmittel-Beständigkeiten, aus.

Das oben eingesetzte Präparat wird wie folgt hergestellt:

25 g des gelben Pigmentes, 37,5 g Polyethylen AC-617 (der Firma ALLIED Chemical USA) und 125 g Natriumchlorid werden in einem Pulvermischer gründlich gemischt. Diese Mischung wird mit einer Laborknetmaschine bei 80 - 100° C während 6 Stunden geknetet. Danach werden 62,5 g Polypropylen Pulver vom Typ ®Daplen PT 55 (der Firma CHEMIE Linz) zur Knetmasse gegebenen und der Kneter auf 30° C gekühlt. Das erhaltene Präparat wird mit Wasser vermahlen, filtriert, salzfrei gewaschen, getrocknet und pulverisiert.

Beispiel 39:

20,3 g 3-Acetyl-2,4-dihydroxychinolin und 13,8 g Isonicotinsäurehydrazid werden in 180 ml Ethylcellosolve analog dem Beispiel 1 kondensiert. Man erhält 27,2 g 3-Acetyl-2,4-dihydroxychinolin-isonicotinoylhydrazon. 3,2 g dieses Produktes werden in 25 ml Dimethylformamid suspendiert und mit einer Lösung von 2,4 g Zink-II-acetat·2 $H_2O$ in 35 ml Dimethylformamid versetzt. Das erhaltene Gemisch wird während 2 Stunden bei 90 - 100° C gerührt, darauf wird das Produkt abfiltriert und anschliessend mit Isopropanol und dann mit Wasser gewaschen. Nach Trocknung des Produktes im Vakuum bei 70 - 80° C erhält man 3,2 g eines gelben Pulvers der nachstehenden Formel

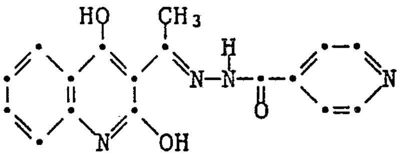

als 1:1-Zinkkomplex.

Beispiel 40:

43,2 g 4-Acetyl-5-hydroxy-3-methyl-1-phenyl-pyrazol werden in 200 ml Ethylcellosolve vorgelegt und mit 27,7 g Isonicotinsäurehydrazid versetzt. Die Reaktionsmischung wird während 18 Stunden bei 120° C (unter

Abdestillieren von wenig Lösungsmittel) gerührt. Der ausgefallene gelbe Niederschlag wird abgesaugt, mit Ethanol und Wasser gewaschen. Nach Trocknen des Produktes bei 70 - 80°C im Vakuum erhält man 47,9 g Reaktionsprodukt (Ligand). 6,7 g dieses Produktes werden in 210 ml Dimethylacetamid suspendiert und mit 4,17 g Kupfer-II-acetat·$H_2O$ versetzt. Das erhaltene Gemisch wird bei 130°C während 6 Stunden unter Stickstoff gerührt, darauf wird das Produkt abfiltriert und anschliessend mit Isopropanol und dann mit Wasser gewaschen. Nach Trocknung des Produktes im Vakuum bei 70 - 80°C erhält man 6,9 g eines gelben Pulvers der Formel

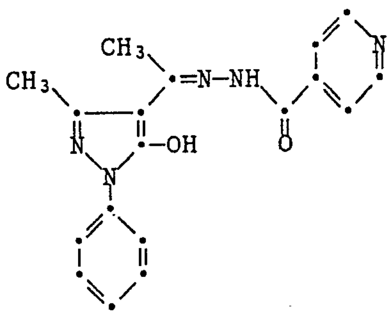

als 1:1-Kupferkomplex.

Dieser Kupferkomplex färbt PVC mit gelben Nuancen.

Beispiele 41 - 50:

Ebenfalls echte gelbe Ausfärbungen in PVC erhält man, wenn man analog dem Beispiel 40 arbeitet, jedoch anstelle des dort verwendeten Pigmentes einen 1:1-Metallkomplex eines Liganden der Formel

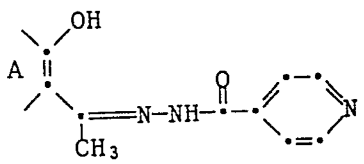

einsetzt, wobei der Ligand aus einem 2-Hydroxyketon der Formel R (zweite Kolonne der Tabelle 3) und Isonicotinsäurehydrazid hergestellt wird und das Metall in der dritten Kolonne der Tabelle 3 angegeben ist. Die Nuance in PVC ist in der vierten Kolonne angegeben.

Tabelle 3

| Beispiel Nr. | R | M | Nuance in PVC |
|---|---|---|---|
| 41 | 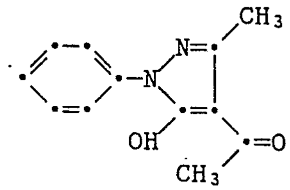 | Ni | gelb |
| 42 | 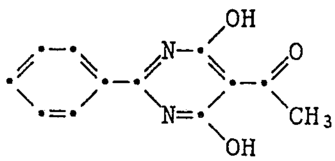 | Cu | gelb |
| 43 | | Ni | gelb |
| 44 | | Co | gelb |
| 45 | 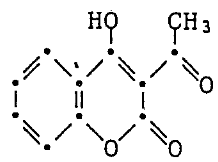 | Cu | grünstichig gelb |
| 46 | | Ni | gelb |
| 47 | 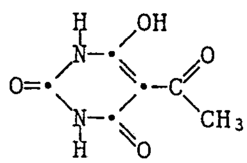 | Cu | grünstichig gelb |
| 48 | | Ni | gelb |
| 49 | 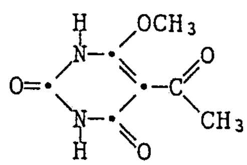 | Cu | grünstichig gelb |
| 50 | | Ni | gelb |

Beispiel 51:

33,4 g 3-Acetyl-2,4-dihydroxy-6-methyl-pyridin werden in 450 ml Ethylcellosolve mit 2,7 g Isonicotinsäurehydrazid analog dem Beispiel 1 kondensiert. Man erhält 51,2 g des Kondensationsproduktes. 2,9 g davon werden in 50 ml Ethylcellosolve suspendiert und mit 2,8 g Nickel-II-acetat·4 $H_2O$ versetzt. Das erhaltene Gemisch wird während 6 Stunden bei 110 - 120°C gerührt, darauf wird das Produkt abfiltriert und anschliessend mit Isopropanol und mit Wasser gewaschen. Nach Trocknung des Produktes im Vakuum bei 70 - 80°C erhält man 3 g eines gelben Pulvers der nachstehenden Formel

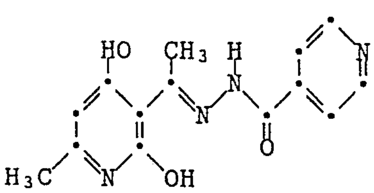

als 1:1-Nickelkomplex.

Ausfärbungen in PVC und Lacken sind gelb gefärbt und migrationsecht.

**Patentansprüche**

1. Hochmolekulares organisches Material enthaltend mindestens einen Metallkomplex aus einem Liganden der Formel I

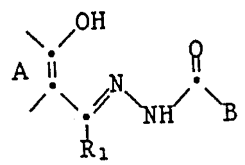

(I),

worin A einen carbocyclisch- oder heterocyclisch-aromatischen Rest und B einen carbocyclischen aromatischen Rest oder einen mindestens ein N-Atom enthaltenden heterocyclischen aromatischen Rest bedeuten, wobei mindestens einer der Reste A und B heterocyclisch sein muss, $R_1$ -$C_1$-$C_{18}$-Alkyl oder einen carbocyclischen aromatischen oder mindestens ein N-Atom enthaltenden heterocyclischen aromatischen Rest bedeutet, und das Metall ein zweifach positiv geladenes Uebergangsmetallkation $Ni^{2+}$, $Cu^{2+}$, $Co^{2+}$, $Zn^{2+}$, $Mn^{2+}$, $Fe^{2+}$, $Cd^{2+}$ oder $Pt^{2+}$ bedeutet oder für den Rest $VO^{2+}$ steht.

2. Hochmolekulares organisches Material gemäss Anspruch 1, wobei das Metallkation $Ni^{2+}$, $Cu^{2+}$, $Co^{2+}$ oder $Zn^{2+}$ bedeutet.

3. Hochmolekulares organisches Material gemäss Anspruch 1, wobei A einen Phenylen-, Phenylphenylen- oder Naphthylenrest, B einen ein N-Atom enthaltenden heterocyclischen aromatischen Rest, und das Metallkation $Ni^{2+}$, $Cu^{2+}$, $Co^{2+}$ oder $Zn^{2+}$ bedeuten.

4. Hochmolekulares organisches Material gemäss Anspruch 1, wobei der Ligand die Formeln II oder III

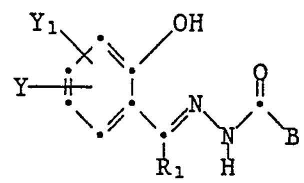

(II)

,

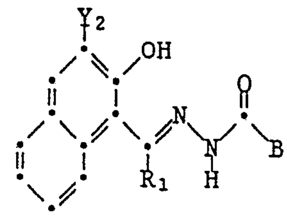

(III)

aufweist,

worin Y -H oder -Cl, $Y_1$ -H, -Cl, -Br, -$CH_3$ oder -O$C_1$-$C_{18}$-Alkyl, $Y_2$ -H, -COOH, -$CONH_2$ oder eine unsubstituierte oder durch -Cl und/oder -$CH_3$ und/oder -$OCH_3$ substituierte Phenylcarbamoylgruppe, $R_1$ -$C_1$-$C_5$-Alkyl oder einen unsubstituierten oder durch -Cl, -$CH_3$ oder -$OCH_3$ substituierten Phenylrest, und B einen 2-, 3- oder 4-Pyridylrest bedeuten, und das Metallkation $Ni^{2+}$, $Cu^{2+}$, $Co^{2+}$ oder $Zn^{2+}$ ist.

5. Hochmolekulares organisches Material gemäss Anspruch 4, worin in den Formeln II und III Y -H, $Y_1$ -H, -Cl oder -$CH_3$, $Y_2$ -H, $R_1$ -$CH_3$, -$C_2H_5$ oder -$C_6H_5$ und B 2-, 3- oder 4-Pyridyl bedeuten, und das Metallkation $Ni^{2+}$, $Cu^{2+}$ oder $Co^{2+}$ ist.

6. Hochmolekulares organisches Material gemäss Anspruch 4, wobei der Ligand die Formel II aufweist, worin Y und $Y_1$ -H, $R_1$ -$CH_3$, -$C_2H_5$ oder -$C_6H_5$ und B 2-, 3- oder 4-Pyridyl sind, und das Metallkation $Ni^{2+}$ oder $Cu^{2+}$ ist.

7. Hochmolekulares organisches Material gemäss Anspruch 1, wobei im Liganden der Formel I A einen Chinolin-, Isochinolin-, Cumarin-, Pyridin-, Pyrimidin- oder Pyrazolonrest, B einen ein N-Atom enthaltenden heterocyclischen aromatischen Rest , und das Metallkation $Ni^{2+}$, $Cu^{2+}$, $Co^{2+}$ oder $Zn^{2+}$ bedeuten.

8. Hochmolekulares organisches Material gemäss Anspruch 7, wobei der Ligand ein Chinolinrest der Formel IV

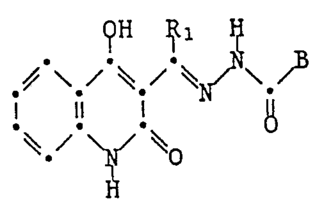

(IV)

ist,

worin $R_1$ -$C_1$-$C_5$-Alkyl oder -$C_6H_5$ und B 2-, 3- oder 4-Pyridyl bedeuten, und das Metallkation $Ni^{2+}$, $Cu^{2+}$ oder $Co^{2+}$ ist.

9. Hochmolekulares organisches Material gemäss Anspruch 8, worin $R_1$ -$CH_3$, -$C_2H_5$ oder -$C_6H_5$, B 2-, 3- oder 4-Pyridyl und das Metallkation $Ni^{2+}$ oder $Cu^{2+}$ bedeuten.

10. Metallkomplexe aus einem Liganden der Formel I

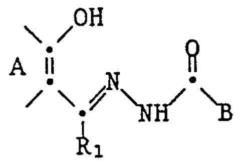 (I),

worin A einen carbocyclisch- oder heterocyclisch-aromatischen Rest und B einen carbocyclischen aromatischen Rest oder einen mindestens ein N-Atom enthaltenden heterocyclischen aromatischen Rest bedeuten, wobei mindestens einer der Reste A und B heterocyclisch sein muss, $R_1$ $-C_1-C_{18}$-Alkyl oder einen carbocyclischen aromatischen oder mindestens ein N-Atom enthaltenden heterocyclischen aromatischen Rest bedeutet, und das Metall ein zweifach positiv geladenes Uebergangsmetallkation $Ni^{2+}$, $Cu^{2+}$, $Co^{2+}$, $Zn^{2+}$, $Mn^{2+}$, $Fe^{2+}$, $Cd^{2+}$ oder $Pt^{2+}$ bedeutet oder für den Rest $VO^{2+}$ steht, wobei, wenn A Phenylen, Chlorphenylen oder Methylphenylen und $R_1$ Methyl bedeuten, B kein Pyridyl- oder Chinolinrest sein darf.

11. Metallkomplexe gemäss Anspruch 10, wobei das Metallkation $Ni^{2+}$, $Cu^{2+}$, $Co^{2+}$ oder $Zn^{2+}$ ist.

12. Metallkomplexe gemäss Anspruch 10, wobei der Ligand die Formeln II oder III

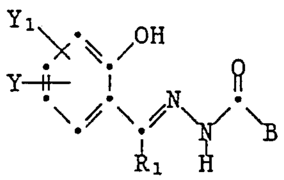 ,

(II)

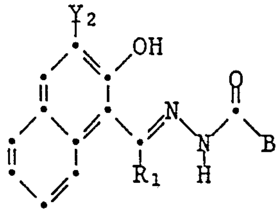

(III)

aufweist, worin Y -H oder -Cl, $Y_1$ -H, -Cl, -Br, $-CH_3$ oder $-OC_1-C_{18}$-Alkyl, $Y_2$ -H, -COOH, $-CONH_2$ oder eine unsubstituierte oder durch -Cl und/oder $-CH_3$ und/oder $-OCH_3$ substituierte Phenylcarbamoylgruppe, $R_1$ $-C_2-C_5$-Alkyl oder einen unsubstituierten oder durch -Cl, $-CH_3$ oder $-OCH_3$ substituierten Phenylrest, und B einen 2-, 3- oder 4-Pyridylrest bedeuten, und das Metallkation $Ni^{2+}$, $Cu^{2+}$, $Co^{2+}$ oder $Zn^{2+}$ ist.

13. Metallkomplexe gemäss Anspruch 12, wobei in den Formeln II und III Y -H, $Y_1$ -H, -Cl oder $-CH_3$, $Y_2$ -H, $R_1$ $-C_2H_5$ oder $-C_6H_5$ und B 2-, 3-oder 4-Pyridyl bedeuten, und das Metallkation $Ni^{2+}$, $Cu^{2+}$ oder $Co^{2+}$ ist.

14. Metallkomplexe gemäss Anspruch 12, wobei der Ligand die Formel II aufweist, worin Y und $Y_1$ -H, $R_1$ $-C_2H_5$ oder $-C_6H_5$ und B 2-, 3- oder 4-Pyridyl sind, und das Metallkation $Ni^{2+}$ oder $Cu^{2+}$ ist.

15. Metallkomplexe gemäss Anspruch 10, wobei der Ligand die Formel IV

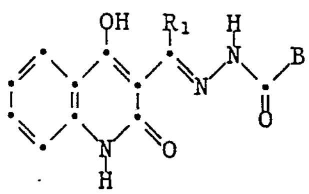

(IV)

aufweist,
worin $R_1$ $-C_1-C_5$-Alkyl oder $-C_6H_5$ und B 2-, 3- oder 4-Pyridyl bedeuten, und das Metallkation $Ni^{2+}$, $Cu^{2+}$ oder $Co^{2+}$ ist.

16. Metallkomplexe gemäss Anspruch 15, worin $R_1$ $-CH_3$, $-C_2H_5$ oder $-C_6H_5$, B 2-, 3- oder 4-Pyridyl und das Metallkation $Ni^{2+}$ oder $Cu^{2+}$ bedeuten.